**Europäisches Patentamt**

**European Patent Office**

**Office européen des brevets**

(19)

(11) Veröffentlichungsnummer : **0 429 503 B1**

(12) **EUROPÄISCHE PATENTSCHRIFT**

(45) Veröffentlichungstag der Patentschrift :
**09.12.92 Patentblatt 92/50**

(51) Int. Cl.⁵ : **B60K 41/16, F16H 47/04**

(21) Anmeldenummer : **89909184.7**

(22) Anmeldetag : **12.08.89**

(86) Internationale Anmeldenummer :
**PCT/EP89/00956**

(87) Internationale Veröffentlichungsnummer :
**WO 90/02058 08.03.90 Gazette 90/06**

(54) **VERFAHREN ZUM BETRIEB EINER VERSTELLBAREN ANTRIEBSEINHEIT.**

(30) Priorität : **17.08.88 DE 3827862**

(43) Veröffentlichungstag der Anmeldung :
**05.06.91 Patentblatt 91/23**

(45) Bekanntmachung des Hinweises auf die
Patenterteilung :
**09.12.92 Patentblatt 92/50**

(84) Benannte Vertragsstaaten :
**AT DE FR IT SE**

(56) Entgegenhaltungen :
**US-A- 4 261 229**
**US-A- 4 306 467**

(73) Patentinhaber : **ZF FRIEDRICHSHAFEN**
**Aktiengesellschaft**
**Löwentaler Strasse 100 Postfach 2520**
**W-7990 Friedrichshafen 1 (DE)**

(72) Erfinder : **PATON, Robert**
**Kühberg 14E**
**W-8390 Passau (DE)**
Erfinder : **ARAIN, Abdul**
**Unteres Bergfeld 26**
**W-8391 Kellberg (DE)**

# Beschreibung

Die Erfindung betrifft ein Verfahren zum Betrieb einer stufenlos verstellbaren Antriebseinheit für ein Kraftfahrzeug mit einer regelbaren Brennkraftmaschine und einem Getriebe mit stufenlos veränderlichem Übersetzungsverhältnis nach dem Oberbegriff des Anspruches 1.

Bekannt ist (Steuerungen, August 1987, S. 38 - 46) eine Steuereinrichtung eines durch eine Brennkraftmaschine angetriebenen, stufenlos verstellbaren Leistungsverzweigungsgetriebes, bei der durch ein Fahrpedal ein Fahrpedalwegsignal abgegeben wird, das zusammen mit einem Drehzahlsignal der Brennkraftmaschine zur Einstellung der Drosselklappenöffnung und zur Steuerung einer Servostelleinrichtung zum stufenlosen Verstellen des Leistungsverzweigungsgetriebes herangezogen wird. Das Leistungsverzweigungsgetriebe mit einer mechanischen und einem hydrostatischen Zweig enthält mehrwellige Koppelgetriebe, die der konstanten Eingangsdrehzahl des mechanischen Zweigs die stufenlos einstellbare Drehzahl des hydrostatischen Zweiges überlagert. Der mechanische Zweig des Leistungsverzweigungsgetriebes weist mehrere Übersetzungsstufen auf. Das Schalten der Übersetzungsstufen im mechanischen Zweig erfolgt bei synchroner Drehzahl der ausgangsseitigen Koppelwellen des Koppelgetriebes. Bei direkt von der Brennkraftmaschine angetriebenem hydrostatischem Zweig und Eingangswelle der Koppelgetriebe ist die Synchrondrehzahl von der Brennkraftmaschinendrehzahl abhängig. Das Schalten der Übersetzungsstufen wird von der Steuereinrichtung überwacht, die aber nicht die Häufigkeit dieser Schaltvorgänge erfaßt.

Ein wesentlicher Vorteil stufenlos verstellbarer Antriebseinheiten liegt darin, daß die Brennkraftmaschine über den gesamten Fahrbereich mit konstanter Drehzahl betrieben werden kann, z. B. mit einer Drehzahl, bei der die Brennkraftmaschine ihre Verbrauchsbestwerte hat. Die Geschwindigkeitsänderungen des Kraftfahrzeuges werden durch Änderungen der Getriebeübersetzungen herbeigeführt. So ergibt sich eine eindeutige Beziehung zwischen Getriebeübersetzung und Fahrgeschwindigkeit. Wählt der Fahrer eine Geschwindigkeit für den Dauerbetrieb des Kraftfahrzeugs, so kann diese gerade bei einer Getriebeübersetzung erreicht werden, die der am Schaltpunkt oder in der Nähe eines Schaltpunktes des mechanischen Getriebezweiges entspricht, so daß bei geringen Fahrgeschwindigkeitsänderungen sich dieser Schaltvorgang zwischen zwei benachbarten Fahrbereichen häufig wiederholt. Insbesondere für landwirtschaftliche Fahrzeuge, die in sehr unebenem Gelände eingesetzt werden, wechselt der Fahrwiderstand sehr häufig und sehr abrupt, und die Folgen sind Schwankungen der Fahrgeschwindigkeit des Fahrzeugs. Wird das landwirtschaftliche Fahrzeug betrieben mit einer vorgewählten Dauergeschwindigkeit, z. B. bei Feldarbeiten, die in der Nähe eines der Schaltpunkte liegt, führen die Fahrgeschwindigkeitsschwankungen zu häufig wiederholten Schaltungen zwischen zwei benachbarten Fahrbereichen. Dadurch erhöht sich der Verschleiß des Getriebes insgesamt, insbesondere aber der der Kupplungen zwischen Koppelgetriebe und Getriebeausgangswelle. Auch nehmen Getriebewirkungsgrad und der Komfort für das gesamte Fahrzeug ab.

Der Erfindung liegt die Aufgabe zugrunde, ein Verfahren zum Betrieb einer Antriebseinheit mit stufenlos veränderlichem Übersetzungsverhältnis zu schaffen, das den Dauerbetrieb der Antriebseinheit bei einer vorgewählten Drehzahl der Ausgangswelle des Getriebes in der Nähe eines Schaltpunktes im mechanischen Getriebezweig ermöglicht und den wiederholten Schaltvorgang dabei sicher ausschließt.

Erfindungsgemäß wird diese Aufgabe dadurch gelöst, daß im Bereich der Schaltpunkte eine Schaltunterdrückung vorgesehen ist, wobei eine außerhalb dieser Schaltunterdrückung liegende Drehzahl der Getriebeausgangswelle allein durch Änderung der Übersetzung des stufenlosen Verzweigungsgetriebes bei konstanter Drehzahl der Brennkraftmaschine erzielbar ist, während die Drehzahl der Getriebeausgangswelle bei der Vorwahl eines innerhalb der Schaltunterdrückung liegenden Wertes von der jeweiligen Grenze der Schaltunterdrückung aus durch Änderung der Drehzahl der Brennkraftmaschine bei konstanter Übersetzung des stufenlosen Verzweigungsgetriebes erreicht wird.

Erfindungsgemäß erfolgt der Betrieb einer verstellbaren Antriebseinheit mit einem Fahrschalter zum Vorwählen einer Dauergeschwindigkeit und einer Regeleinrichtung, die den Dauerbetrieb eines stufenlos verstellbaren Leistungsverzweigungsgetriebes nur bei Übersetzungsverhältnissen zuläßt, die einen gewissen Mindestabstand vom Übersetzungsverhältnis an den Schaltpunkten zwischen den Fahrbereichen im mechanischen Zweig des Getriebes haben, und die Regeleinrichtung ändert die Drehzahl der Brennkraftmaschine, um Endgeschwindigkeiten zu erreichen, die mit zugelassenen Übersetzungsverhältnissen des Getriebes nicht zu erreichen sind.

Ein wesentlicher Vorteil des erfinderischen Konzeptes gemäß dem kennzeichnenden Teil des Hauptanspruchs liegt darin, daß die Regeleinrichtung einen Betriebszustand der stufenlos verstellbaren Antriebseinheit vermeidet, in dem bei geringer Änderung der Drehzahl der Ausgangswelle des Getriebes das Verhältnis der Übersetzungen im mechanischen Zweig des Getriebes geschaltet wird. Liegt die vorgewählte Endgeschwindigkeit außerhalb des Bereichs mit Schaltunterdrückung, so verstellt die Regeleinrichtung ausschließlich das Übersetzungsverhältnis des Getriebes und erreicht bei konstanter Drehzahl der Brennkraftmaschine so die vorgewählte Endgeschwindigkeit. Bei geringer Abweichung der Endgeschwindigkeit vom Schaltpunkt des mechanischen Getriebezweiges, d. h. Endgeschwindigkeit innerhalb des Bereichs der Schaltunterdrückung, verstellt die Regeleinrichtung das Getriebe nur bis zu einem Übersetzungsverhältnis, das so weit vom Übersetzungsverhältnis am Schaltpunkt entfernt liegt, daß bei geringfügigen Änderungen der Endgeschwindigkeit der Schaltpunkt nicht erreicht wird. Die Regeleinrichtung verstellt dann die Drehzahl der Brennkraftmaschine, um die vorgewählte Endgeschwindigkeit zu erreichen.

Hierdurch ist z. B. der Fahrer eines Kraftfahrzeuges in der Wahl der Geschwindigkeit, die er zum Betrieb wünscht, nicht eingeschränkt, der Getriebewirkungsgrad an den Schaltpunkten verbessert und der Verschleiß für die Antriebseinheit insgesamt vermindert.

Gemäß Anspruch 2 wird der Schaltvorgang im mechanischen Zweig des Leistungsverzweigungsgetriebes zur Erreichung der vorgewählten Geschwindigkeit unterdrückt, wenn die Brennkraftmaschine bei 90 Prozent oder mehr ihrer Eckleistung betrieben wird. Eine geringe Fahrwiderstandserhöhung genügt bei diesem Betriebszustand, um die Drehzahl der Brennkraftmaschine zu drücken. Indem der Schaltvorgang im mechanischen Zweig des Leistungsverzweigungsgetriebes ab einer bestimmten Leistungsausnutzung, z. B. 90 Prozent der Eckleistung der Brennkraftmaschine, unterdrückt wird, wird mögliches ständiges Hoch- und Runterschalten vermieden.

Die Ansprüche enthalten eine sinnvolle Kombination von Lösungsmerkmalen. Allerdings sind für den Fachmann im Rahmen der Erfindung weitere Kombinationen ohne weiteres möglich.

Fig. 1 zeigt die Einrichtung für das erfindungsgemäße Verfahren.

Fig. 2 zeigt die Wirkungsweise des erfindungsgemäßen Verfahrens.

An einem Fahrschalter 1 wird eine frei wählbare Geschwindigkeit eingestellt. Die verstellbare Antriebseinheit besteht aus einer regelbaren Brennkraftmaschine 2 herkömmlicher Bauart, an die ein stufenlos verstellbares, hydrostatisch-mechanisches Leistungsverzweigungsgetriebe 3 angeflanscht ist. Zwischen der Brennkraftmaschine 2 und dem Getriebe 3 befindet sich keine schaltbare Kupplung. Eine Regeleinrichtung 4 kontrolliert automatisch die Drehzahl der Brennkraftmaschine 2 und das Übersetzungsverhältnis des stufenlos verstellbaren hydrostatisch-mechanischen Leistungsverzweigungsgetriebes 3, so daß die der vorgewählten Geschwindigkeit entsprechende Drehzahl einer Ausgangswelle 12 des Getriebes 3 angesteuert wird. Hierzu befindet sich ein Meßwertaufnehmer an einer Antriebswelle 10 und ein Meßwertaufnehmer an der Getriebeausgangswelle 12, die die Wellendrehzahlen über die Leitungen 14, 15 an die Regeleinrichtung 4 weitergeben. In Abhängigkeit von einem gespeicherten Fahrprogramm gehen von der Regeleinrichtung 4 Stellsignale über die Leitungen 16, 17 an die Brennkraftmaschine 2 und an das Getriebe 3.

Die Regelung der Brennkraftmaschine 2 erfolgt in üblicher Weise durch Drosselung des Luftansaugquerschnittes oder durch Regelung der Kraftstoffeinspritzmenge. Der Betrieb der Brennkraftmaschine 2 soll vorwiegend bei konstanter Drehzahl erfolgen.

Die Regeleinrichtung 4 bestimmt das Übersetzungsverhältnis des Getriebes 3 über den Schwenkwinkel einer verstellbaren Primäreinheit 7 im hydrostatischen Zweig 5 und über Kupplungen 9, die die Übersetzung im mechanischen Getriebezweig 6 festlegen.

Die Primäreinheit 7 im hydrostatischen Getriebezweig 5 ist über die Antriebswelle 10 von der regelbaren Brennkraftmaschine 2 direkt angetrieben und dreht sich mit einer Drehzahl proportional zur Drehzahl der Brennkraftmaschine 2.

Innerhalb seines Stellbereichs kann das Übersetzungsverhältnis des hydrostatischen Getriebezweigs 5 stufenlos verändert werden, indem das Fördervolumen der Primäreinheit 7 und damit die Drehzahl einer Sekundäreinheit 8 des hydrostatischen Zweiges 5 des Getriebes 3 kontinuierlich verstellt wird. Der kontinuierliche Übersetzungsbereich des hydrostatischen Getriebezweiges 5 wird durch Getriebeelemente, z. B. Planetengetriebe im mechanischen Getriebezweig 6 des Getriebes 3, vervielfacht.

Die Brennkraftmaschine 2 treibt über ein Vorgelege den mechanischen Getriebezweig 6 an, der mindestens ein Koppelgetriebe (nicht dargestellt) enthält. Die Sekundäreinheit 8 treibt über eine Hohlwelle 18 das Koppelgetriebe mit stufenlos variabler Drehzahl an. Die Brennkraftmaschine 2 treibt über eine Welle 19 das Koppelgetriebe mit konstanter Drehzahl an. Koppelwellen 11, 13 der Koppelgetriebe sind angetrieben mit stufenlos variablen Drehzahlen, die sich aus der Summierung der stufenlos variablen Drehzahlen der Sekundäreinheit 8 und der konstanten Drehzahl der Eingangswelle 19 ergeben.

Bei kontinuierlicher Zunahme des Fördervolumens der Primäreinheit 7 erreicht eine über die Kupplungen 9 mit der Getriebeausgangswelle 12 verbundene Koppelwelle 11 Synchrondrehzahl mit einer für den benachbarten Drehzahlbereich bestimmten Koppelwelle 13. Die Kupplung 9 verbindet zunächst diese Welle 13 mit der Getriebeausgangswelle 12 und gibt sofort anschließend die im vorigen Fahrbereich in Eingriff befindliche Koppelwelle 11 frei.

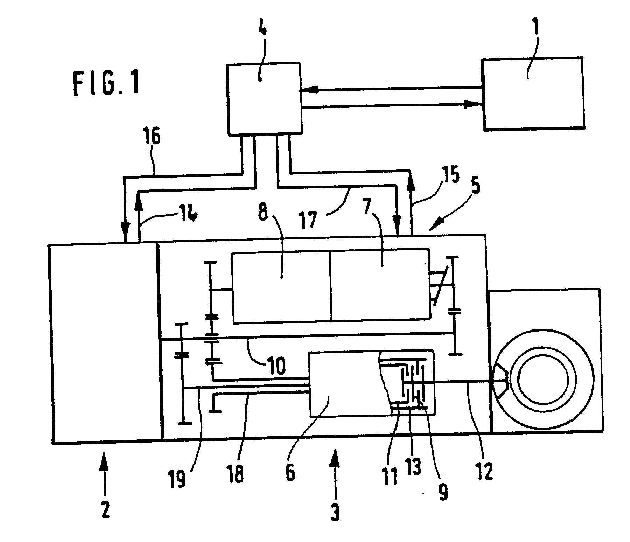

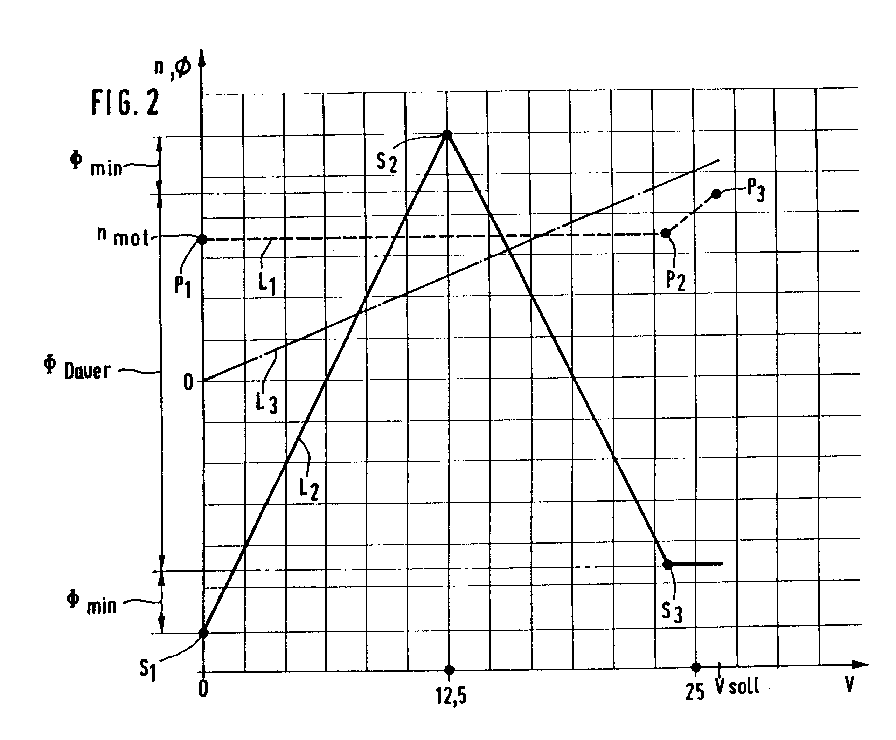

Fig. 2: Für einen stufenlos verstellbaren Antrieb, bestehend aus Brennkraftmaschine und einem Leistungsverzweigungsgetriebe mit drei Übersetzungsstufen im mechanischen Getriebezweig nach Fig. 1 soll anhand des Diagramms die Wirkungsweise der Regeleinrichtung erläutert werden. Die Geschwindigkeiten, bei denen Übersetzungsänderungen im mechanischen Getriebezweig vorgenommen werden, sollen für dieses Beispiel bei 12,5 und 25 km/h angenommen werden. Die Fahrzeuggeschwindigkeit ist in der Abszisse aufgetragen. Ist die vom Fahrer vorgewählte Endgeschwindigkeit 26 km/h und die Brennkraftmaschine soll mit konstanter Drehzahl z. B. bei günstigsten Verbrauchswerten betrieben werden, versucht die Regeleinrichtung die Endgeschwindigkeit folgendermaßen zu erreichen:

Drehzahl der Brennkraftmaschine $n_{Mot}$ nach Linie L1 im Bereich P1 bis P2: Die Brennkraftmaschine 2 wird auf eine Drehzahl $n_{Mot}$ eingestellt, die günstigste Verbrauchswerte mit sich bringt, z. B. eine mittlere Drehzahl, die konstant beibehalten wird. Ein Meßwertaufnehmer an der Abtriebswelle 10 der Brennkraftmaschine 2 kann hierzu an die Regeleinrichtung 3 angeschlossen sein, so daß die konstante Drehzahl überwacht werden kann.

Schwenkwinkel der Primäreinheit nach Linie L2 im Bereich S1 bis S2: Die Regeleinrichtung 4 beschleunigt das Fahrzeug aus dem Stand zunächst durch Verstellen der Übersetzung des Getriebes 3. Im ersten Fahrbereich bis 12,5 km/h wird der Schwenkwinkel der Primäreinheit 7 entsprechend der Linie L2 von S1 nach S2 verstellt. Bei S2 ist Synchrondrehzahl erreicht. Die Regeleinrichtung 4 bewirkt, daß der zweite Fahrbereich im mechanischen Getriebezweig 6 geschaltet wird.

Schwenkwinkel der Primäreinheit nach Linie L2 im Bereich S2 bis S3: Die weitere Änderungen der Übersetzung des Getriebes 3 bewirkt die Regeleinrichtung 4 wieder durch Ändern des Schwenkwinkels der Primäreinheit 7 bis zum Punkt S3. Ein für die Schaltunterdrückung wirksamer Bereich von 10 Prozent des Übersetzungsverhältnisses am Schaltpunkt soll in diesem Beispiel als ausreichende Sicherheit gegen häufiges Durchfahren des Schaltpunktes angesehen werden. Bei einer vorgewählten Geschwindigkeit von 26 km/h und dem Schaltpunkt bei 25 km/h unterbricht die Regeleinrichtung 4 gemäß der Erfindung das Verfahren zur Geschwindigkeitserhöhung des Fahrzeugs durch Getriebeübersetzungsänderung bei 22,5 km/h. Der Schwenkwinkel der Primäreinheit 7 wird nicht weiter verändert, und die Übersetzung des Getriebes bleibt konstant. Die Endgeschwindigkeit $V_{Soll}$ wird erreicht durch Anheben der Drehzahl $n_{Mot}$ der Brennkraftmaschine 2 entsprechend dem Verlauf der Linie L1 von P2 nach P3. Bei diesem Verfahren soll die Zunahme der Geschwindigkeit gemäß der Linie L3 von 0 bis zum Erreichen der Endgeschwindigkeit $V_{Soll}$ konstant sein.

Würde ein Schaltpunkt erreicht und die Brennkraftmaschine 2 läuft bereits in der Nähe, z. B. bei 90 Prozent ihrer Eckleistung, unterdrückt die Regeleinrichtung 4 den Schaltvorgang im mechanischen Zweig 6 des Leistungsverzweigungsgetriebes 3 nach dem obengenannten Verfahren.

Die Leistung der Brennkraftmaschine 2 kann durch Meßwertgeber, die z. B. den Kraftstoffmengendurchsatz und die Drehzahl der Brennkraftmaschine 2 erfassen und diese Meßwerte in einer elektronischen Datenverwertungsanlage, z. B. einem digitalen Rechner, in Stellsignale umwandeln, ermittelt werden.

**Patentansprüche**

1. Verfahren zum Betrieb einer Antriebseinheit für Kraftfahrzeuge mit einer regelbaren Brennkraftmaschine (2) und einem hydrostatisch-mechanischen Leistungsverzweigungsgetriebe (3), dessen mechanischer sowie hydrostatischer Leistungszweig (5, 6) eingangsseitig über eine gemeinsame Antriebswelle (10) von der regelbaren Brennkraftmaschine (2) angetrieben und ausgangsseitig in mindestens einem Koppelgetriebe summiert werden, das seinerseits ausgangsseitige Koppelwellen (11, 13) aufweist, die in einem Schaltpunkt bei synchroner Drehzahl an eine Getriebeausgangswelle (12) kuppelbar sind, dadurch **gekennzeichnet,** daß im Bereich der Schaltpunkte eine Schaltunterdrückung vorgesehen ist, wobei eine außerhalb dieser Schaltunterdrückung liegende Drehzahl $n_{Soll}$ der Getriebeausgangswelle (12) des Getriebes (3) allein durch Änderung der Übersetzung des Getriebes (3) bei konstanter Drehzahl der Brennkraftmaschine (2) erzielbar ist, während die Drehzahl der Getriebeausgangswelle (12) bei der Vorwahl eines innerhalb der Schaltunterdrückung liegenden Wertes $n_{Soll}$ von der jeweiligen Grenze der Schaltunterdrückung durch Änderung der Drehzahl der Brennkraftmaschine (2) bei konstanter Übersetzung des Getriebes (3) erreicht wird.

2. Verfahren zum Betrieb einer Antriebseinheit gemäß Anspruch 1, dadurch **gekennzeichnet,** daß die Schaltunterdrückung höchstens 10 % der Synchrondrehzahl der Koppelwellen im Schaltpunkt umfaßt.

3. Verfahren zum Betrieb einer Antriebseinheit gemäß Anspruch 1, dadurch **gekennzeichnet,** daß bei einer Leistung der Brennkraftmaschinenleistung (2) von 90 % der Eckleistung das Übersetzungsverhältnis im mechanischen Zweig (6) des Getriebes (3) konstant gehalten und die Drehzahl der Ausgangswelle (12) des Getriebes (3) durch Erhöhung der Drehzahl der Brennkraftmaschine (2) erreicht wird.

**Claims**

1. Process for operating of a drive unit for motor vehicles with a controllable combustion engine (2) and a hydrostatic mechanical power distribution transmission (3) whose mechanical and hydrostatic sections (5, 6) are driven by a controllable combustion engine (2) via a shared input shaft (10) on the input side and which, on the output side, are summarized in at least one linkage, in turn having connecting shafts on the output side (11, 13) which can be engaged at a shift point at synchronous speed with a transmission output shaft (12), **characterized** in that a shift suppression device is fitted in the shift point range such that nominal rotation speeds of the transmission output shaft (12) of the transmission (3) can be achieved simply by changing the ratio of the transmission (3) with the combustion engine (2) running at a constant speed whilst, if a nominal rotation speed is preselected within the shift suppression range bounded by either shift suppression limit, the speed of the transmission output shaft (12) is achieved by changing the rotation speed of the combustion engine (2) with the ratio of the transmission constant.

2. Process for operation of a drive unit in accordance with claim 1, **characterized** in that the shift suppression includes a max. 10 % of the synchronous speed of the connecting shafts at the shift point.

3. Process for operating a drive unit in accordance with claim 1, **characterized** in that at a power of 90 % of the reference power of the combustion engine (2), the ratio relationship of the mechanical section of the transmission (3) is kept constant and the rotational speed of the output shaft of the transmission (3) is attained by increasing the speed of the combustion engine (2).

**Revendications**

1. Procédé de fonctionnement d'une unité d'entraînement pour véhicules à moteur comportant un moteur à combustion réglable (2) et une transmission hydrostatique-mécanique à dérivation de puissance (3) dont la branche mécanique (6) et la branche hydrostatique (5) sont entraînées en entrée au moyen d'un arbre moteur commun (10) par le moteur réglable (2) et sont additionnées en sortie dans au moins une boîte de couplage comportant, à sa sortie, des arbres de couplage (11, 13) qui, à un point de commutation, peuvent être couplés à un arbre de sortie (12) à une vitesse synchrone, **caractérisé** en ce qu'une suppression de commutation est prévue à proximité des points de commutation, de manière qu'une vitesse prescrite $n_{Soll}$ de l'arbre de sortie (12) de la transmission (3), située en dehors de cette suppression de commutation, peut être obtenue uniquement par variation de la démultiplication de la transmission (3), avec une vitesse constante du moteur à combustion (2), tandis que la vitesse de l'arbre de sortie (12), en cas de présélection d'une valeur $n_{Soll}$ située dans la zone de suppression de commutation, est atteinte à partir de la limite correspondante de la suppression de commutation au moyen d'une variation de la vitesse du moteur à combustion (2), avec une démultiplication constante de la transmission (3).

2. Procédé de fonctionnement d'une unité d'entraînement selon la revendication 1, **caractérisé** en ce que la suppression de commutation couvre au maximum 10% de la vitesse synchrone des arbres de couplage au point de commutation.

3. Procédé de fonctionnement d'une unité d'entraînement selon la revendication 1, **caractérisé** en ce que, à une puissance de 90% de la puissance de pointe du moteur à combustion (2), le rapport de transmission dans la branche mécanique (6) de la transmission (3) est maintenu constant et la vitesse de l'arbre de sortie (12) de la transmission (3) est atteinte par augmentation de la vitesse du moteur à combustion (2).

FIG.1

FIG. 2